# DEMANDE DE BREVET EUROPEEN

(11) **EP 2 264 974 A1**
(43) Date de publication de la demande: **22.12.2010**
(21) Numéro de dépôt: 10164981.2
(22) Date de dépôt: 04.06.2010
(51) Int. Cl.: H04L 29/06, H04M 3/51

(54) **Procédé d'etablissement d'un appel multimedia entre un serveur et un client**

(30) Priorité: 19.06.2009 FR 0954163
(71) Demandeur: Alcatel Lucent, 75007 Paris (FR)
(72) Inventeur: Bertrand, Daniel, 67400, ILLKIRCH (FR)
(74) Mandataire: Nicolle, Olivier

(57) **Abrégé**

La présente invention concerne un procédé d'établissement d'un appel multimédia vers un agent client au moyen d'un agent serveur au travers d'un réseau de communication comprenant ledit agent serveur et ledit agent client. Elle se **caractérise en ce que** le procédé comporte :
- requérir l'établissement d'un appel multimédia vers l'agent client selon un premier mode ;
- envoyer vers l'agent serveur une réponse de présentation d'appel multimédia à l'agent client ;
- sur réception par l'agent serveur d'une requête de prise d'appel multimédia selon un deuxième mode, requérir une mise à jour de l'appel multimédia avec le deuxième mode vers l'agent client ;
- acquitter la requête de mise à jour ; et
- confirmer à l'agent serveur l'établissement de l'appel multimédia.

## Description

### DOMAINE TECHNIQUE DE L'INVENTION

La présente invention concerne un procédé d'établissement d'un appel multimédia vers un agent client au moyen d'un agent serveur au travers d'un réseau de communication comprenant ledit agent serveur et ledit agent client. L'invention concerne également un réseau de communication permettant de mettre en oeuvre ledit procédé.

Elle trouve une application particulière dans le domaine des réseaux de communications, en particulier mais non exclusivement dans le domaine des réseaux de communication IP (basés sur le protocole Internet).

### ARRIÈRE-PLAN TECHNOLOGIQUE DE L'INVENTION

Dans le domaine des réseaux de communication, un état de la technique connu de procédé d'établissement d'un appel multimédia vers un agent client au moyen d'un agent serveur au travers d'un réseau de communication comprenant ledit agent serveur et ledit agent client, comprend les étapes :
- d'arrêter à mi-parcours le processus d'établissement d'un appel vers un agent client selon un premier mode (par exemple un mode manuel) lorsqu'une requête de changement de mode en cours d'appel est reçu pour établir une prise d'appel selon un deuxième mode (par exemple un mode automatique), et
- de redémarrer tout le processus d'établissement d'un appel vers un agent client pour prendre en compte ledit deuxième mode.

On notera qu'un processus d'établissement d'un appel selon un mode donné se base en général sur un échange de messages entre l'agent serveur et l'agent client quelque soit le protocole de communication utilisé.

Un inconvénient de cet état de la technique est que le nombre d'échanges de messages est très important ; les ressources, telles que l'agent client ou l'agent serveur, ne sont donc pas utilisées de façon optimum.

### DESCRIPTION GENERALE DE L'INVENTION

La présente invention a pour but un procédé d'établissement d'un appel multimédia vers un agent client au moyen d'un agent serveur au travers d'un réseau de communication comprenant ledit agent serveur et ledit agent client, qui permette de résoudre le problème posé ci-dessus.

Ce but est atteint par un procédé d'établissement d'un appel multimédia vers un agent client au moyen d'un agent serveur au travers d'un réseau de communication comprenant ledit agent serveur et ledit agent client, comportant les étapes de :
- requérir l'établissement d'un appel multimédia vers l'agent client selon un premier mode ;
- envoyer vers l'agent serveur une réponse de présentation d'appel multimédia à l'agent client ;
- sur réception par l'agent serveur d'une requête de prise d'appel multimédia selon un deuxième mode, requérir une mise à jour de l'appel multimédia avec le deuxième mode vers l'agent client ;
- acquitter la requête de mise à jour ; et
- confirmer à l'agent serveur l'établissement de l'appel multimédia.

Comme on va le voir en détail par la suite, le fait de faire simplement une demande de mise à jour du mode sans arrêter complètement le processus d'établissement d'un appel multimédia, permet de réduire le nombre de messages échangés et ainsi d'optimiser l'utilisation des ressources utilisées.

Selon des modes de réalisation non limitatifs, le procédé peut comporter en outre une ou plusieurs caractéristiques supplémentaires parmi les suivantes :
- L'étape de requérir l'établissement d'un appel comprend l'envoi d'une requête de demande comprenant un paramètre initialisé selon un mode spécifique. Cela est simple à mettre en oeuvre.
- L'étape de requérir une mise à jour comprend l'envoi d'une requête de mise mise à jour comprenant un paramètre initialisé selon un mode spécifique. Cela est simple à mettre en oeuvre.

- Le procédé comporte une étape supplémentaire de confirmer à l'agent serveur la prise en compte de la requête d'établissement d'appel selon le premier mode. Cela permet de confirmer la réception de la requête d'établissement d'appel.
- Le premier mode est un mode manuel et le deuxième mode est un mode automatique. Ainsi, cela permet de passer d'un mode manuel à un mode automatique en cours d'établissement d'un appel.
- Le procédé comporte en outre une étape de requérir une transmission de données relatives à l'appel multimédia dans une unique direction. Cela permet par la suite à un agent client appelant de lancer un message d'appel via le haut-parleur de l'agent client appelé.
- Le réseau de communication est un réseau de communication IP et les étapes du procédé sont effectuées au niveau d'une couche de session de communication. Comme une couche de session se situe directement au dessus d'une couche de transport des données, cela est simple à mettre en oeuvre, car il n'y a que les requêtes au niveau de cette couche de session qui vont être modifiées pour prendre en compte un appel automatique en cours d'établissement d'appel.
- Le protocole SIP est utilisé. Cela permet d'utiliser un protocole couramment usité au niveau d'une couche de session de communication.

En outre, il est également proposé un agent serveur pour réseau de communication, apte à établir un appel multimédia vers un agent client au travers d'un réseau de communication comprenant ledit agent serveur et ledit agent client, selon lequel il est apte à :
- requérir l'établissement d'un appel multimédia vers l'agent client selon un premier mode ;
- recevoir une réponse de présentation d'appel multimédia à l'agent client
- sur réception d'une requête de prise d'appel multimédia selon un deuxième mode, requérir une mise à jour de l'appel multimédia avec le deuxième mode vers l'agent client ;
- recevoir un acquittement de la requête de mise à jour ; et
- recevoir une confirmation de l'établissement de l'appel multimédia.

En outre, il est également proposé un agent client pour réseau de communication, apte à établir un appel multimédia au moyen d'un agent serveur au travers d'un réseau de communication comprenant ledit agent serveur et ledit agent client, selon lequel il est apte à :
- recevoir une requête d'établissement d'un appel multimédia de l'agent serveur selon un premier mode ;
- envoyer vers l'agent serveur une réponse de présentation d'appel multimédia ;
- sur réception par l'agent serveur d'une requête de prise d'appel multimédia selon un deuxième mode, recevoir une requête de mise à jour de l'appel multimédia avec le deuxième mode ;
- acquitter la requête de mise à jour ; et
- confirmer à l'agent serveur l'établissement de l'appel multimédia.

En outre, il est également proposé un réseau de communication apte à établir un appel multimédia vers un agent client au moyen d'un agent serveur ledit réseau de communication comprenant ledit agent serveur caractérisé selon la caractéristique précédente, et ledit agent client caractérisé selon la caractéristique précédente.

En outre, il est également proposé un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes, lorsqu'il est chargé sur un ordinateur.

L'invention et ses différentes applications seront mieux comprises à la lecture de la description qui suit et à l'examen des Figs. qui l'accompagnent.

### BREVE DESCRIPTION DES FIGURES

Celles-ci ne sont présentées qu'à titre indicatif et nullement limitatif de l'invention.
- La Fig.1 est un schéma simplifié d'un exemple non limitatif d'un réseau de communication comprenant un agent serveur et un agent client, dans lequel le procédé selon l'invention est mis en oeuvre ;
- La Fig.2 est un organigramme simplifié d'un mode de réalisation non limitatif du procédé d'établissement d'un appel multimédia selon l'invention ;
- La Fig.3 illustre schématiquement des échanges de requêtes entre un agent serveur et un agent client selon un mode de réalisation non limitatif du procédé de la Fig. 2 ; et
- La Fig.4 illustre schématiquement un réseau de communication comprenant un agent serveur et un agent client aptes à effectuer des étapes du procédé d'établissement d'un appel multimédia de la Fig. 2.

### DESCRIPTION DE MODES DE REALISATION DE L'INVENTION

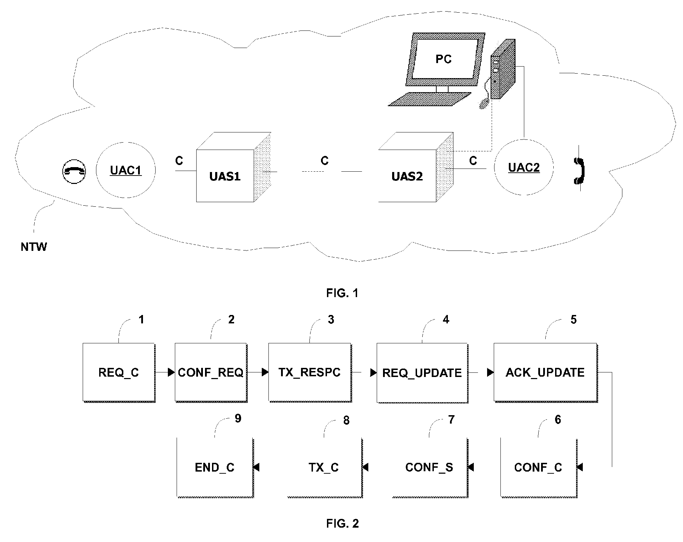

Le procédé d'établissement d'un appel multimédia vers un agent client au moyen d'un agent serveur au travers d'un réseau de communication comprenant ledit agent serveur et ledit agent client, est décrit dans un mode de réalisation non limitatif à la Fig. 2.

Il est mis en oeuvre dans un réseau de communication NTW comportant une pluralité d'agents client UAC reliés entre eux par des agents serveurs UAS associés.

Les agents clients UAC sont dans un exemple non limitatif, des postes téléphoniques. Les agents serveurs UAS sont dans un exemple non limitatif, des autocommutateurs téléphoniques permettant notamment de relier les postes téléphoniques entre eux. Par ailleurs, le réseau de communication NTW comprend en outre au moins un agent tiers PC relié à un agent client UAC (par une liaison filaire ou sans fil).
Un exemple non limitatif de réseau de communication NTW est illustré à la Fig. 1 de manière schématique. Dans cet exemple, il comporte deux agents clients UAC1 et UAC2 auxquels sont associés respectivement deux agents serveurs UAS1 et UAS2. Par ailleurs, le réseau de communication NTW comprend un agent tiers PC relié à l'agent client UAC2. L'agent tiers PC est dans un exemple non limitatif un équipement informatique.

Dans un mode de réalisation non limitatif, le réseau de communication NTW est un réseau de communication basé sur le protocole Internet, que l'on appellera réseau de communication IP (« Internet Protocol »), ledit protocole représentant la couche réseau du modèle OSI (« Open Systems Interconnection » en anglais) bien connu de l'homme du métier.

Dans un mode de réalisation non limitatif, les étapes du procédé d'établissement d'un appel multimédia sont effectuées au niveau d'une couche de session de communication.

Dans une variante de réalisation non limitative de ce mode de réalisation:
- le protocole de communication SIP - protocole d'établissement de session (« Session Initiation Protocol » en anglais) est utilisé au niveau de la couche session pour l'établissement des appels multimédias.
- le protocole de communication RTP (« Real-time Transport Protocol » en anglais) et RTCP (« Real-time Transport Control Protocol » en anglais) est utilisé au niveau de la couche transport pour le transport des flux multimédias eux-mêmes.

On notera que le protocole SIP est destiné à des applications non limitatives telles que :
- la voix sur IP,
- la visiophonie (voix sur IP plus vidéo sur IP),
- la messagerie instantanée (« chat » en anglais).

Ainsi, on entend par appel multimédia, un appel faisant appel à un ou plusieurs types de médias. Dans des modes de réalisation non limitatifs, un appel multimédia est :
- un appel téléphonique utilisant la voix sur IP ; et/ou
- un appel vidéo comprenant des images ; et/ou
- un appel de messagerie instantanée etc.

Le protocole SIP est défini par le groupe de standardisation IETF (« Internet Engineering Task Force ») en particulier dans les documents RFC3261 et RFC3265.

On notera qu'outre l'établissement d'appels multimédias, le protocole SIP se charge de l'authentification et de la localisation des agents clients. Il se base sur un échange de requêtes (appelées également messages). Le protocole SIP ne transporte pas les données échangées durant la session comme la voix ou la vidéo. Comme il est indépendant de la transmission des données, tout type de protocole peut être utilisé pour cet échange, tels que le protocole RTP/RTPC. Cependant le protocole SIP encapsule dans ses propres requêtes des messages SDP (« Session Description Protocol ») comportant des données utilisables par la couche transport.

Dans la suite de la description, on prend comme exemple non limitatif, l'établissement d'un appel multimédia entre un premier poste téléphonique UAC1 utilisant le réseau téléphonique public et un deuxième poste téléphonique UAC2 utilisant un réseau téléphonique privé. Dans ce cas, l'agent serveur UAS2 associé à l'agent client UAC2 est un autocommutateur téléphonique privé (appelé en anglais « Private Automatic Branch eXchange », lequel est abrégé par le sigle PABX).

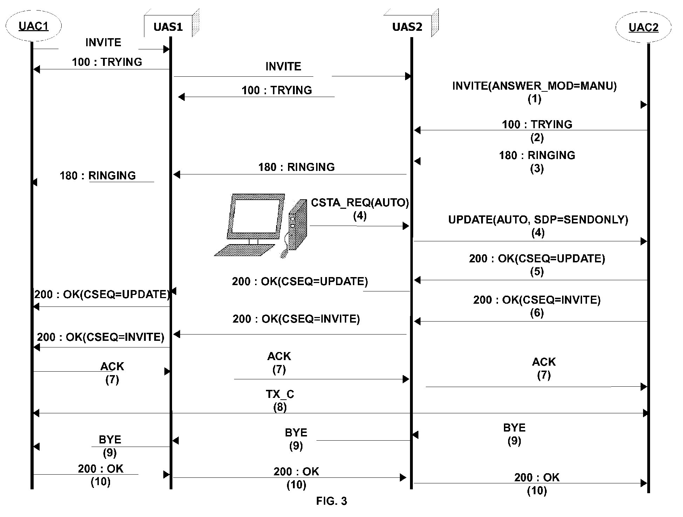

Lorsqu'un utilisateur d'un premier agent client UAC1 veut téléphoner à un utilisateur d'un deuxième agent client UAC2, le premier agent client UAC1 envoie une requête d'établissement d'un appel multimédia au deuxième agent client UAC2, ladite requête étant relayée par le premier agent serveur UAS1 vers le deuxième agent serveur UAS2.
Ainsi, comme illustré à la Fig. 3, lorsque le protocole SIP est utilisé dans un exemple non limitatif, la requête d'établissement d'un appel multimédia est une requête codée INVITE qui permet au premier agent client UA1 de demander une nouvelle session pour l'établissement d'un appel mutlimédia. A la suite de cette requête, une confirmation de la requête INVITE est envoyée d'une part par le premier agent serveur UAS1 au premier agent client UAC1 (requête codée 100 TRYING dans l'exemple non limitatif de la Fig. 3) et d'autre part par le deuxième agent serveur UAS2 au premier agent serveur UAS1 lorsque la requête INVITE est relayée audit deuxième agent serveur UAS2.

A ce moment, le procédé d'établissement d'un appel multimédia C vers l'agent client UAC2 au moyen de l'agent serveur UAS2 au travers du réseau de communication NTW est mise en oeuvre. Il comporte les étapes suivantes.
- requérir l'établissement d'un appel multimédia C vers l'agent client UAC2 selon un premier mode MOD1 (étape REQ_C) ;
- envoyer vers l'agent serveur UAS2 une réponse de présentation RINGING d'appel multimédia C à l'agent client UAC2 (étape TX_RESPC) ;
- sur réception par l'agent serveur UAS2 d'une requête CSTA_REQ de prise d'appel multimédia C selon un deuxième mode MOD2, requérir une mise à jour de l'appel multimédia C avec le deuxième mode MOD2 vers l'agent client UAC2 (étape REQ_UPDATE) ;
- acquitter la requête de mise à jour (étape ACK_UPDATE) ; et
- confirmer à l'agent serveur UAS2 l'établissement de l'appel multimédia C (étape CONF_C).

Dans un mode de réalisation non limitatif, le premier mode MOD1 est un de mode manuel MANU et le deuxième mode MOD2 est un mode automatique AUTO. On a ainsi une prise d'appel manuelle ou automatique. Cela signifie que soit l'utilisateur de l'agent client UAC2 décroche lui-même le poste téléphonique UAC2, soit cela est fait automatiquement.

Selon un mode de réalisation non limitatif, le procédé comporte en outre une étape supplémentaire de confirmer à l'agent serveur UAS2 la prise en compte de la requête d'établissement d'appel selon le premier mode MOD1 (étape CONF_REQ).

Pour la suite de la description, dans le mode de réalisation non limitatif du procédé décrit, le procédé comprend cette étape supplémentaire.

Ainsi, les étapes du procédé d'établissement d'un appel multimédia vers un agent client UAC2 au moyen d'un agent serveur UAS2 sont décrites en détail ci-après en se référant aux Figs. 2 à 3.

**Dans une première étape 1),** on requiert l'établissement d'un appel multimédia C vers l'agent client UAC2 selon un premier mode MOD1.

Dans un mode de réalisation non limitatif, cette étape comprend l'envoi d'une requête de demande comprenant un paramètre initialisé selon un mode spécifique, ici le premier mode MOD1. Lorsque le protocole SIP est utilisé dans un mode de réalisation non limitatif, cette étape comprend l'envoi d'une requête de demande codée INVITE comprenant un paramètre ANSWER_MODE initialisé selon un mode spécifique MOD, ici le premier mode MOD1, tel qu'illustré à la Fig. 3. Cette requête est décrite dans le document RFC5373 intitulé « Requesting Answering Modes for the Session Initiation Protocol (SIP) » Novembre 2008 - et édité par l'IETF.

On notera que dans un autre mode de réalisation le paramètre ANSWER_MODE peut ne pas être utilisé. Dans ce cas, on peut configurer l'agent serveur UAS2 et l'agent client UAC2 pour que le mode par défaut soit le mode manuel MANU.

**Dans une deuxième étape 2),** on confirme à l'agent serveur UAS2 la prise en compte de la requête d'établissement d'appel selon le premier mode MOD1.
Dans un mode de réalisation non limitatif, cette étape comprend l'envoi d'une requête de confirmation.
Lorsque le protocole SIP est utilisé dans un mode de réalisation non limitatif, cette étape comprend l'envoi d'une requête codée 100 TRYING, tel qu'illustré à la Fig. 3.

**Dans une troisième étape 3),** on envoie vers l'agent serveur UAS2 une réponse de présentation RINGING d'appel multimédia C à l'agent client UAC2.
Dans un mode de réalisation non limitatif, cette étape comprend l'envoi d'une requête de réponse de présentation.
Lorsque le protocole SIP est utilisé dans un mode de réalisation non limitatif, cette étape comprend l'envoi d'une requête codée 180 RINGING, tel qu'illustré à la Fig. 3.
Cette étape permet de confirmer une présentation d'appel multimédia. On sait ainsi que l'agent client UAC2 peut prendre un appel par exemple. En effet dans le cas où l'agent client UAC2 ne peut pas prendre d'appel, une réponse d'indisponibilité sera envoyée à l'agent serveur UAS2. Ainsi, dans ce cas, lorsque le protocole SIP est utilisé dans un mode de réalisation non limitatif, une requête codée 486 BUSY sera envoyée.

**Dans une quatrième étape 4),** sur réception par l'agent serveur UAS2 d'une requête CSTA_REQ de prise d'appel multimédia C selon un deuxième mode MOD2, on requiert une mise à jour de l'appel multimédia C avec le deuxième mode MOD2 vers l'agent client UAC2.
Dans un mode de réalisation non limitatif, cette étape comprend l'envoi d'une requête de prise d'appel multimédia comprenant un paramètre initialisé selon un mode spécifique MOD, ici le deuxième mode MOD2.
Lorsque le protocole SIP est utilisé dans un mode de réalisation non limitatif, l'étape de requérir une mise à jour comprend l'envoi d'une requête de mise à jour codée UPDATE comprenant un paramètre ANSWER_MODE initialisé selon un mode spécifique MOD, ici le deuxième mode MOD2.
Cette requête est basée sur la requête UPDATE décrite dans le document RFC3311 intitulé « the SIP UPDATE Method » - Septembre 2002 - édité par l'IETF, à laquelle on a ajouté un nouveau champ ANSWER_MODE.

Par ailleurs, dans un premier mode de réalisation non limitatif, la requête CSTA_REQ de prise d'appel multimédia C est générée par un agent tiers PC.
Dans un exemple de réalisation non limitatif, l'agent tiers PC est un équipement informatique tel qu'un ordinateur.
Dans cet exemple, dans une variante de réalisation non limitative, la requête de prise d'appel multimédia est une requête basée sur le protocole CSTA (« Computer Supported Telecommunications Applications »). On notera que ce protocole de communication est un protocole de niveau applicatif entre des équipements informatiques et des équipements téléphoniques (ici, un agent serveur UAS2). Ce protocole est défini par l'ECMA (« European Computer Manufacturers Association»).
Grâce à ce protocole, il est possible de prendre connaissance des événements téléphoniques survenant dans l'agent serveur UAS2 (arrivée d'un appel, raccroché, ...) ce qui permet alors de dématérialiser l'agent client UAC2 (par exemple le poste téléphonique) dans une application informatique.
On notera que cette variante de réalisation est par exemple utilisée dans le cadre de centres d'appels téléphoniques. En effet, dans ce cadre, l'agent serveur UAS2 est un PABX du centre d'appels téléphoniques et l'agent client UAC2 est un casque, dans lequel est intégré la fonction téléphonique, le casque étant relié à un agent tiers PC qui est un ordinateur.
Dans ce cadre, l'agent tiers PC comporte une application informatique qui permet dans des exemples non limitatifs :
- à l'utilisateur du casque et de l'agent tiers, d'activer automatiquement (via par exemple le clavier de l'ordinateur) la fonction téléphonique lorsqu'il reçoit un appel, cette activation déclenchant l'envoi de la requête CSTA décrite ci-dessus ;
- d'activer automatiquement la fonction téléphonique sur la base d'une liste d'interphonie dans laquelle sont inscrites les personnes pour qui un décrochage automatique doit s'effectuer, cette activation déclenchant l'envoi de la requête CSTA décrite ci-dessus.

Dans un deuxième mode de réalisation non limitatif, la requête CSTA_REQ de prise d'appel multimédia C est générée par le premier agent client UAC1 lui-même. Dans cet exemple, dans une variante de réalisation non limitative, la requête de prise d'appel multimédia est alors une requête propriétaire.

Dans un troisième mode de réalisation non limitatif, la requête CSTA_REQ de prise d'appel multimédia C est générée par le deuxième agent serveur UAS2 lui-même qui décide du décroché automatique. Dans un exemple non limitatif, si au bout d'un certain temps l'agent client UAC2 n'a pas répondu, l'agent serveur UAS2 le fait décrocher automatiquement.

**Dans une cinquième étape 5),** on acquitte la requête de mise à jour UPDATE.
Dans un mode de réalisation non limitatif, cette étape comprend l'envoi d'une requête d'acquittement comprenant un champ rempli avec un identifiant de la requête de mise à jour.
Lorsque le protocole SIP est utilisé dans un mode de réalisation non limitatif, cette étape comprend l'envoi d'une requête d'acquittement codée 200 OK comprenant un champ CSEQ rempli avec un identifiant de la requête UPDATE, tel qu'illustré à la Fig. 3.
On notera que dans un mode de réalisation non limitatif, l'acquittement de la requête de mise à jour est effectué par le deuxième agent client UAC2 vers le deuxième agent serveur UAS2 qui relaye l'information (dans l'exemple pris la requête d'acquittement 200 OK) vers le premier agent client UAC1 via le premier agent serveur UAS1.

**Dans une sixième étape 6),** on confirme à l'agent serveur UAS2 l'établissement de l'appel multimédia C.
Lorsque le protocole SIP est utilisé dans un mode de réalisation non limitatif, cette étape comprend l'envoi d'une requête de confirmation codée 200 OK comprenant un champ CSEQ rempli avec un identifiant de la requête INVITE, tel qu'illustré à la Fig. 3.
On notera que dans un mode de réalisation non limitatif, la confirmation est effectuée par le deuxième agent client UAC2 vers le deuxième agent serveur UAS2 qui relaye l'information (dans l'exemple pris la requête 200 OK) vers le premier agent client UAC1 via le premier agent serveur UAS1.

**Dans une septième étape 7),** dans un mode de réalisation non limitatif, lorsque le protocole SIP est utilisé, on confirme l'établissement d'une session multimédia (étape CONF_S illustrée sur la Fig. 2)).
La confirmation s'effectue par l'envoi d'une requête codée ACK du premier agent client UAC1 vers le premier agent serveur UAS1 qui relaye la requête vers le deuxième agent client UAC2 via le deuxième agent serveur UAS2.

**Dans une huitième étape 8),** l'établissement d'un appel multimédia ayant été établie, les données multimédia (voix, images, etc.) sont transmises sur la couche transport (via le protocole transport RTP/RTCP par exemple) entre le premier agent client UAC1 et le deuxième agent client UAC2 (étape TX_C illustrée sur la Fig. 2).

**Dans une neuvième étape 9),** lorsque l'envoi des données est terminé, l'établissement de l'appel multimédia est terminé (étape END_C illustrée sur la Fig.2).
Lorsque le protocole SIP est utilisé dans un mode de réalisation non limitatif, cette étape comprend l'envoi d'une requête de fin de session codée BYE, tel qu'illustré à la Fig. 3.
Dans l'exemple non limitatif de la Fig. 3, la fin d'établissement de l'appel multimédia (raccrochement) est effectuée par le deuxième agent client UAC2 vers le deuxième agent serveur UAS2 qui relaye l'information (dans l'exemple pris la requête BYE) vers le premier agent client UAC1 via le premier agent serveur UAS1. On notera que la fin de l'établissement de l'appel multimédia peut également être effectuée par le premier agent client UAC1.

**Dans une dixième étape 10),** on acquitte la fin d'établissement de l'appel multimédia. Le premier agent client UAC1 confirme ainsi qu'il a compris que le deuxième agent client UAC2 a raccroché.
Lorsque le protocole SIP est utilisé dans un mode de réalisation non limitatif, cette étape comprend l'envoi d'une requête d'acquittement codée 200 OK, tel qu'illustré à la Fig. 3.
Dans l'exemple non limitatif de la Fig. 3, l'acquittement est effectué par le premier agent client UAC1 vers le premier agent serveur UAS1 qui relaye l'information (dans l'exemple pris la requête 200 OK) vers le deuxième agent client UAC2 via le deuxième agent serveur UAS2.

Ainsi, le procédé d'établissement d'un appel multimédia permet de passer d'un mode de décrochage (prise d'appel) manuel vers un mode de décrochage (prise d'appel) automatique en cours d'établissement d'un appel multimédia sans avoir à annuler la requête d'établissement d'appel initiale (requête INVITE dans le cas du protocole SIP).

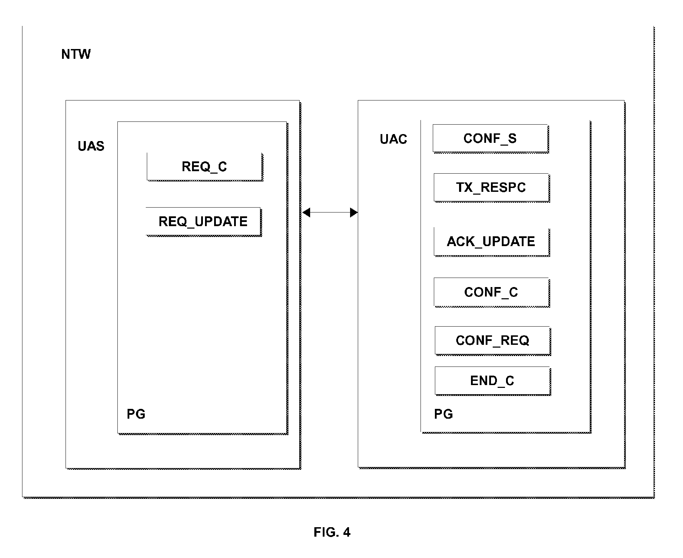

Le procédé d'établissement d'un appel multimédia est mis en oeuvre par un réseau de communication NTW apte à établir un appel multimédia C vers un agent client UAC2 au moyen d'un agent serveur UAS2 ledit réseau de communication NTW comprenant ledit agent serveur UAS2 et ledit agent client UAC2, tel qu'illustré à la Fig. 4 selon un mode de réalisation non limitatif.
L'agent serveur UAS2 pour réseau de communication NTW est apte à établir un appel multimédia C vers un agent client UAC2 au travers d'un réseau de communication NTW comprenant ledit agent serveur UAS2 et ledit agent client UAC2, et il est apte à :
- requérir l'établissement d'un appel multimédia C vers l'agent client UAC2 selon un premier mode MOD1 ;
- recevoir une réponse de présentation RINGING d'appel multimédia C à l'agent client UAC2 ;
- sur réception d'une requête CSTA_REQ de prise d'appel multimédia C selon un deuxième mode MOD2, requérir une mise à jour UPDATE de l'appel multimédia C avec le deuxième mode MOD2 vers l'agent client UAC2 ;
- recevoir un acquittement (CSEQ=UPDATE) de la requête de mise à jour ; et
- recevoir une confirmation (CSEQ=INVITE) de l'établissement de l'appel multimédia C.
L'agent client UAC2 pour réseau de communication NTW est apte à établir un appel multimédia C au moyen d'un agent serveur UAS2 au travers d'un réseau de communication NTW comprenant ledit agent serveur UAS2 et ledit agent client UAC2, et il est apte à :
- recevoir une requête d'établissement INVITE d'un appel multimédia C de l'agent serveur UAS2 selon un premier mode MOD1 ;
- envoyer vers l'agent serveur UAS2 une réponse de présentation RINGING d'appel multimédia C ;
- sur réception par l'agent serveur UAS2 d'une requête CSTA_REQ de prise d'appel multimédia C selon un deuxième mode MOD2, recevoir une requête de mise à jour UPDATE de l'appel multimédia C avec le deuxième mode MOD2 ;
- acquitter (CSEQ=UPDATE) la requête de mise à jour UPDATE ; et
- confirmer (CSEQ=INVITE) à l'agent serveur UAS2 l'établissement de l'appel multimédia C.

On notera que la mise en oeuvre du procédé exposé ci-dessus peut être effectuée au moyen d'un dispositif micro programmé « software », d'une logique câblée et/ou de composants électroniques « hardware ».
Ainsi, le réseau de communication NTW peut comporter un ou plusieurs produits programmes d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit. Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.
Dans l'exemple non limitatif de la Fig. 4, le programme d'ordinateur PG est inscrit dans une mémoire d'un agent client UAC2 et d'un agent serveur UAS2. Dans ce cas, dans un mode de réalisation non limitatif, on peut prévoir d'activer l'exécution des séquences d'instructions selon que le programme est exécuté dans l'agent client UAC2 ou dans l'agent serveur.

Bien entendu la description n'est pas limitée à l'application, aux modes de réalisation et aux exemples décrits ci-dessus.
Ainsi, dans un mode de réalisation non limitatif, un agent serveur UAS est un un agent client UAC qui jour le rôle de serveur. A ce moment, dans l'exemple décrit, l'établissement d'un appel multimédia s'effectue entre deux postes téléphoniques, sans passer par des autocommutateurs téléphoniques. On notera que dans ce cas, le programme d'ordinateur PG n'a pas besoin d'être activé de façon spécifique.
Ainsi, dans un mode de réalisation non limitatif, le procédé d'établissement d'un appel multimédia comporte en outre une étape de requérir une transmission de données relatives à l'appel multimédia dans une unique direction. Dans une variante non limitative la direction s'effectue de l'agent serveur UAS2 vers l'agent client UAC2.
Dans un mode de réalisation non limitatif, cette étape comprend l'envoi d'une requête de mise à jour encapsulant un message avec un champ codant l'envoi dans une unique direction.
Lorsque le protocole SIP est utilisé dans un mode de réalisation non limitatif, cette étape comprend l'envoi d'une requête de mise à jour codée UPDATE encapsulant un message SDP avec un champ codé émission simple = SENDONLY (contrairement à un champ codé émission et réception). Ce champ est décrit dans le document RFC3264 édité par l'IETF.
Ainsi, la combinaison du paramètre ANSWER_MODE = MOD2 et du champ dans le message SDP = SENDONLY permet un décrochage automatique et de faire dans le même temps une annonce sur un haut parleur de l'agent client UAC2 si ce dernier comprend des haut-parleurs.
Dans une variante de réalisation non limitative illustrée sur la Fig. 3, on utilise la même requête de mise à jour UPDATE utilisée pour requérir une mise à jour de l'appel multimédia avec le deuxième mode MOD2.
Ainsi, les étapes du procédé ont été décrites dans un mode de réalisation non limitatif en utilisant le protocole SIP, mais bien entendu, d'autres protocoles peuvent être utilisés tel que dans un exemple non limitatif le protocole réseau numérique à intégration de services RNIS, (ISDN « Integrated Services Digital Network » en anglais). Dans ce cas, dans un exemple non limitatif, la requête INVITE décrite précédemment peut être remplacée par une requête SETUP, la requête UPDATE peut être remplacée par une requête FACILITY, la requête RINGING peut être remplacée par une remplacée par une requête ALERTING, la requête 200 OK associée à la requête INVITE peut être remplacée par une requête CONNECT, la requête BYE peut être remplacée par une requête RELEASE et la requête 200 OK associée à la requête BYE peut être remplacée par une requête RELEASE COMPLETE.

Ainsi, l'invention décrite présente notamment les avantages suivants :
- elle est simple à mettre en oeuvre, notamment dans le mode de réalisation non limitatif qui se base sur l'utilisation du protocole SIP ;
- elle permet de changer de mode de décrochage en cours d'établissement d'appel multimédia ;
- elle diminue le nombre de requêtes envoyées par rapport à une solution selon laquelle on arrête l'établissement d'un appel multimédia en cours et on recommencerait tout le processus si une requête de changement de mode était reçue en cours d'établissement d'appel (solution qui reviendrait à envoyer un message codé CANCEL, un message d'acquittement 200 OK associé au message CANCEL, un message codé 487 - requête avortée et enfin un message d'acquittement ACK associé au message 487 dans le cas d'une utilisation du protocole SIP). Ainsi :
   - l'utilisation des ressources (agent client, agent serveur) est optimisée puisqu'on diminue le temps d'occupation desdites ressources par l'envoi des requêtes ;
   - le temps de décrochage automatique diminue ;
- elle permet une gestion des appels corrects puisque la liste d'appels résultante ne comprend pas d'appels avortés contrairement à une solution dans laquelle on arrête l'établissement d'un appel en cours de route ;
- elle permet de changer de mode (MANU/AUTO) à l'intérieur d'une même session d'établissement d'un appel téléphonique contrairement à une solution dans laquelle on arrête l'établissement d'un appel en cours de route ; et
- elle permet de réduire le nombre de messages, notamment ans le mode de réalisation où les étapes sont effectuées au niveau de la couche de session de communication. En effet, la couche de session se situant directement au dessus de la couche de transport, il n'y a que les requêtes au niveau de cette couche de session qui sont modifiées pour prendre en compte un appel automatique en cours d'établissement d'appel. Les requêtes au niveau des couches supérieures restent inchangées.

## Revendications

1. Procédé d'établissement d'un appel multimédia (C) vers un agent client (UAC) au moyen d'un agent serveur (UAS) au travers d'un réseau de communication (NTW) comprenant ledit agent serveur (UAS) et ledit agent client (UAC), comportant les étapes de :
- requérir l'établissement d'un appel multimédia (C) vers l'agent client (UAC) selon un premier mode (MOD1) ;
- envoyer vers l'agent serveur (UAS) une réponse de présentation (RINGING) d'appel multimédia (C) à l'agent client (UAC) ;
- sur réception par l'agent serveur (UAS) d'une requête (CSTA_REQ) de prise d'appel multimédia selon un deuxième mode (MOD2), requérir une mise à jour de l'appel multimédia (C) avec le deuxième mode (MOD2) vers l'agent client (UAC) ;
- acquitter la requête de mise à jour (UPDATE) ; et
- confirmer à l'agent serveur (UAS) l'établissement de l'appel multimédia (C).

2. Procédé d'établissement d'un appel multimédia selon la revendication 1, selon lequel l'étape de requérir l'établissement d'un appel comprend l'envoi d'une requête de demande (INVITE) comprenant un paramètre (ANSWER_MODE) initialisé selon un mode spécifique (MOD).

3. Procédé d'établissement d'un appel multimédia selon la revendication 1 ou 2, selon lequel l'étape de requérir une mise à jour comprend l'envoi d'une requête de mise à jour (UPDATE) comprenant un paramètre (ANSWER_MODE) initialisé selon un mode spécifique (MOD).

4. Procédé d'établissement d'un appel multimédia selon l'une quelconque des revendications précédentes, selon lequel il comporte une étape supplémentaire de confirmer à l'agent serveur (UAS) la prise en compte de la requête d'établissement d'appel selon le premier mode (MOD1).

5. Procédé d'établissement d'un appel multimédia selon l'une quelconque des revendications précédentes, selon lequel le premier mode (MOD1) est un mode manuel (MANU) et le deuxième mode (MOD2) est un mode automatique (AUTO).

6. Procédé d'établissement d'un appel multimédia selon l'une quelconque des revendications précédentes, selon lequel il comporte en outre une étape de requérir une transmission de données relatives à l'appel multimédia dans une unique direction.

7. Procédé d'établissement d'un appel multimédia selon l'une quelconque des revendications précédentes, selon lequel le réseau de communication (NTW) est un réseau de communication IP et les étapes du procédé sont effectuées au niveau d'une couche de session de communication.

8. Procédé d'établissement d'un appel multimédia selon la revendication précédente, selon lequel le protocole SIP est utilisé.

9. Agent serveur (UAS) pour réseau de communication (NTW), apte à établir un appel multimédia (C) vers un agent client (UAC) au travers d'un réseau de communication (NTW) comprenant ledit agent serveur (UAS) et ledit agent client (UAC), selon lequel il est apte à :
- requérir l'établissement d'un appel multimédia (C) vers l'agent client (UAC) selon un premier mode (MOD1) ;
- recevoir une réponse de présentation (RINGING) d'appel multimédia (C) à l'agent client (UAC) ;
- sur réception d'une requête (CSTA_REQ) de prise d'appel multimédia (C) selon un deuxième mode (MOD2), requérir une mise à jour de l'appel multimédia (C) avec le deuxième mode (MOD2) vers l'agent client (UAC) ;
- recevoir un acquittement (CSEQ=UPDATE) de la requête de mise à jour (UPDATE) ; et
- recevoir une confirmation (CSEQ=INVITE) de l'établissement de l'appel multimédia (C).

10. Agent client (UAC) pour réseau de communication (NTW), apte à établir un appel multimédia (C) au moyen d'un agent serveur (UAS) au travers d'un réseau de communication (NTW) comprenant ledit agent serveur (UAS) et ledit agent client (UAC), selon lequel il est apte à :
- recevoir une requête d'établissement (INVITE) d'un appel multimédia (C) de l'agent serveur (UAS) selon un premier mode (MOD1);
- envoyer vers l'agent serveur (UAS) une réponse de présentation (RINGING) d'appel multimédia (C) ;
- sur réception par l'agent serveur (UAS) d'une requête (CSTA_REQ) de prise d'appel multimédia (C) selon un deuxième mode (MOD2), recevoir une requête de mise à jour (UPDATE) de l'appel multimédia (C) avec le deuxième mode (MOD2) ;
- acquitter (CSEQ=UPDATE) la requête de mise à jour (UPDATE) ; et
- confirmer (CSEQ=INVITE) à l'agent serveur (UAS) l'établissement de l'appel multimédia (C).

11. Réseau de communication (NTW) apte à établir un appel multimédia (C) vers un agent client (UAC) au moyen d'un agent serveur (UAS) ledit réseau de communication (NTW) comprenant ledit agent serveur (UAS) **caractérisé** selon la revendication 8, et ledit agent client (UAC) **caractérisé** selon la revendication 9.

12. Produit programme d'ordinateur (PG) comportant une ou plusieurs
séquences d'instructions exécutables par une unité de traitement d'information, l'exécution desdites séquences d'instructions permettant une mise en oeuvre du procédé selon l'une quelconque des revendications précédentes 1 à 8, lorsqu'il est chargé sur un ordinateur.
